# EUROPEAN PATENT SPECIFICATION

(11) **EP 2 411 693 B1**
(45) Date of publication and mention of the grant of the patent: **19.09.2018**
(21) Application number: 10756427.0
(22) Date of filing: 24.03.2010
(51) Int. Cl.: F16D 48/06, B60W 10/02, B60W 10/06

(54) **MOTOR VEHICLE WITH AUTOMATIC CLUTCH**
MOTORFAHRZEUG MIT AUTOMATIKGETRIEBE
VÉHICULE À MOTEUR AVEC EMBRAYAGE AUTOMATIQUE

(30) Priority: 27.03.2009 SE 0950197
(43) Date of publication of application: 01.02.2012
(73) Proprietor: Scania CV AB (publ), 151 87 Södertälje (SE)
(72) Inventor: LUNDH, Kristian, S-152 71 Södertälje (SE); GRANSTRÖM, Magnus, S-129 49 Hägersten (SE)
(74) Representative: Scania CV AB
(86) International application number: PCT/SE2010/050323
(87) International publication number: WO 2010/110731

(56) References cited:
- US-A- 4 558 772
- US-A- 4 867 287
- US-A- 5 993 355
- US-A1- 2002 042 327
- US-A1- 2004 128 050
- US-A1- 2004 192 504

## Description

### TECHNICAL FIELD

The present invention relates to a method for improving the drivability of a motor vehicle. The invention relates also to a computer programme product comprising programme code for a computer for implementing a method according to the invention. The invention relates also to a system for improving the drivability of a vehicle, and to a motor vehicle equipped with the system.

### BACKGROUND

Certain vehicles today have an automated driveline. Those vehicles usually have no conventional clutch pedal but are equipped with a control unit adapted to automatically controlling inter alia an engine and a clutch of a driveline of the vehicle.

Examples of such systems are disclosed in US2004/192504, US4558772A and US2002/042327. When setting the vehicle in motion, it is necessary to determine a speed of an engine of the vehicle which in various respects is appropriate during closing of the clutch in the driveline. The speed which the engine generates during closure of the clutch is referred to in the art as clutch engagement speed. If the engine of the vehicle generates a higher clutch engagement speed, the vehicle may accelerate more quickly than if the engine generates a lower clutch engagement speed. An advantage of using a higher clutch engagement speed is that the vehicle, particularly if heavily laden and/or moving off on an upgrade, runs less risk of the engine stalling.

It is known that a higher clutch engagement speed results in greater wear of the clutch of the driveline of the vehicle. Using a high clutch engagement speed may often shorten the service life of a clutch. Greater clutch wear is undesirable in that replacing or repairing the vehicle's clutch is time-consuming and expensive.

There are today various methods for determining the clutch engagement speed of a motor vehicle with automatic clutch. According to an example, a predetermined clutch engagement speed is used. According to an example, the predetermined clutch engagement speed is 700 rpm. The predetermined clutch engagement speed is preselected as a compromise between desired acceleration of the vehicle and clutch wear, as discussed above. However, it affords no assurance that a torque generated by the engine of the vehicle at this predetermined clutch engagement speed will be sufficient to enable the vehicle to actually move off from a stationary state in certain conditions, e.g. when a heavily laden trailer is coupled to the vehicle or the vehicle is intended to move off uphill from a stationary state. There is risk of the engine of the motor vehicle stalling if this solution is applied.

Another way of determining the clutch engagement speed is to associate it with an accelerator pedal position whereby a speed of the engine will depend on the position of the accelerator pedal in such a way that the further the accelerator pedal is depressed the higher the speed of the engine will be. In this case the speed of the engine is plotted against the accelerator pedal position. A relationship between accelerator pedal position and torque transmitted in the driveline of the vehicle will not always be linear but will instead depend on this plotting, which has to be done for each engine type if desired functionality is to be achieved. Nor will the accelerator pedal be used in every case to set the vehicle in motion. An example of such a case is when a functionality such as "full range cruise control" is used. Another disadvantage of this solution is that greater wear of the clutch of the driveline of the vehicle becomes a reality.

There is thus currently a need to improve the drivability of motor vehicles which are equipped with automatic clutch. In particular, there is a need to improve the drivability of a vehicle when setting it in motion and moving off.

### SUMMARY OF THE INVENTION

An object of the present invention is to propose a novel and advantageous method for improving the drivability of a motor vehicle.

Another object of the invention is to propose a method, a system and a computer programme for improving the drivability of a motor vehicle.

A further object of the invention is to propose a method, system and computer programme for improving the drivability of a motor vehicle with automatic clutch in a user-friendly way, particularly when setting the motor vehicle in motion and moving off.

These objects are achieved with a method for improving the drivability of a motor vehicle, which method comprises the steps according to claim 1.

With advantage, the invention makes it possible for a speed of the engine to be controlled irrespective of the position of the accelerator pedal of the motor vehicle, this being particularly applicable in cases where a torque of the driveline of the motor vehicle is controlled by a certain function, e.g. "full range cruise control".

An advantage of the innovative method is that the clutch of the motor vehicle cannot extract more torque than the engine can generate for a given engine speed. This means that the risk of the driver stalling the engine when setting the vehicle in motion is greatly reduced or eliminated. This knowledge will impart confidence to the driver of the motor vehicle, particularly in stressed driving situations in which rapid initial acceleration of the vehicle is desired. As a progressive or stepped increase in the speed of the engine, where applicable, is effected automatically, the invention results in a user-friendly method for improving the drivability of a motor vehicle.

The method according to the invention is robust in that very few configuration-dependent parameters are involved. The signals, e.g. a prevailing speed of the engine and a torque requested by the driver from the engine, which, when applicable, are needed for determining whether a speed of the engine should be increased in order to be able to deliver more torque, are currently already generated reliably.

The method may further comprise the step of adjusting a prevailing speed of the engine on the basis of a selected clutch engagement speed. Adjusting the speed of the engine may be effected in a number of different ways, resulting in a dynamic method for improving the drivability of the vehicle.

The method may further comprise the step of causing the vehicle to move off by sliding the clutch in the driveline of the vehicle on in such a way that the torque of the sliding clutch does not exceed a modified maximum available torque indicated by a first signal.

The method may further comprise the step of manually generating a second signal containing information about torque requested from the engine. This affords the advantage of providing a driver with good manual control of the vehicle, which may be desirable in particular driving situations.

The method may further comprise the step of generating the second signal containing information about torque requested from the engine on the basis of data stored in a control unit of the vehicle. This affords the advantage of providing a robust method. The vehicle may be in a mode in which a control programme generates the second signal, resulting in a user-friendly method. The method may further comprise the step of comparing the first signal with the second signal in such a way as to make it possible to determine whether a predetermined state obtains and to select the clutch engagement speed of the engine for an automated clutch in the driveline of the vehicle if said state obtains. If a torque requested is equal to or exceeds a maximum available torque, an engine speed increase may be effected. This minimises the risk of there being too much torque in the driveline of the vehicle and hence reduces the risk of the engine stalling.

A first signal may contain information about a maximum available torque of a flywheel of the vehicle which can be generated by an engine of the vehicle at a prevailing speed of the engine. The information about maximum available torque may be generated in a simple, reliable and robust way. The information about the maximum available torque of a flywheel at a given engine speed may be used to determine whether a torque requested might cause stalling of the vehicle's engine.

The first signal may contain information about a modified maximum available torque of a flywheel of the vehicle which can be generated by an engine of the vehicle at a prevailing speed of the engine. Applying the modified maximum available torque provides a safety margin to cater for various loads of the vehicle. The result is a more robust and reliable method for improving the drivability of the vehicle. The method may further comprise the step of determining the modified maximum available torque on the basis of the information about the maximum available torque which can be generated by an engine of the vehicle at the prevailing speed of the engine.

The method is easy to implement in existing motor vehicles. Software for improving drivability according to the invention may be installed in a control unit of the vehicle during the manufacture of the vehicle. A purchaser of the vehicle may thus have the possibility of selecting the function of the method as an option. Alternatively, software which comprises programme code for effecting the innovative method for improving the drivability of a motor vehicle may be installed in a control unit of the vehicle on the occasion of upgrading at a service station, in which case the software may be loaded into a memory of the control unit. Implementing the innovative method is therefore inexpensive, particularly as no further knobs, buttons or electronic components need be installed in the vehicle. Necessary hardware is currently already provided in the vehicle. The invention therefore represents a cost-effective solution to the problem of improving the drivability of a motor vehicle according to the invention.

Software which comprises programme code for improving the drivability of a motor vehicle is easy to update or replace. Various portions of the software which comprise programme code for improving the drivability of the motor vehicle may also be replaced independently of one another. This modular configuration is advantageous from a maintenance perspective.

The objects indicated above are also achieved with a system for improving the drivability of a motor vehicle, which system comprises the features according to claim 10. Advantageous embodiments are indicated in the dependent claims 11-18.

The objects indicated above are also achieved with a motor vehicle which comprises the features according to claim 19. The motor vehicle may be a truck, bus or passenger car.

These objects are also achieved with a computer programme for improving the drivability of a motor vehicle, which computer programme comprises programme code stored on a computer-readable medium for causing an electronic control unit or another computer connected to the electronic control unit to perform the steps indicated in claims 1-9.

These objects are also achieved with a computer programme product comprising a programme code stored on a computer-readable medium for performing the method steps according to claims 1-9 when said computer programme is run on an electronic control unit or another computer connected to the electronic control unit.

Further objects, advantages and novel features of the present invention will become apparent to one skilled in the art from the following details, and also by putting the invention into practice. Whereas the invention is described below, it should be noted that it is not limited to the specific details described. Specialists having access to the teachings herein will recognise further applications, modifications and incorporations within other fields, which are within the scope of the invention.

### CONCISE DESCRIPTION OF THE DRAWINGS

For fuller understanding of the present invention and further objects and advantages thereof, the detailed description set out below should be read together with the accompanying drawings, in which the same reference notations denote similar items in the various diagrams, and in which:
Figure 1 illustrates schematically a vehicle according to an embodiment of the invention;
Figure 2 illustrates schematically a subsystem for the vehicle depicted in Figure 1, according to an embodiment of the invention;
Figure 3 illustrates schematically a diagram which shows how various parameters of a motor vehicle vary with time, according to an embodiment of the invention;
Figure 4 illustrates schematically a signal diagram according to an embodiment of the invention;
Figure 5 illustrates schematically how a torque of the engine of the vehicle depends on an engine speed of the motor vehicle;
Figure 6a illustrates schematically a flowchart of a method for improving the drivability of a motor vehicle, according to an embodiment of the invention;
Figure 6b illustrates schematically a flowchart in more detail of a method for improving the drivability of a motor vehicle, according to an embodiment of the invention; and
Figure 7 illustrates schematically a computer according to an embodiment of the invention.

### DETAILED DESCRIPTION OF THE DRAWINGS

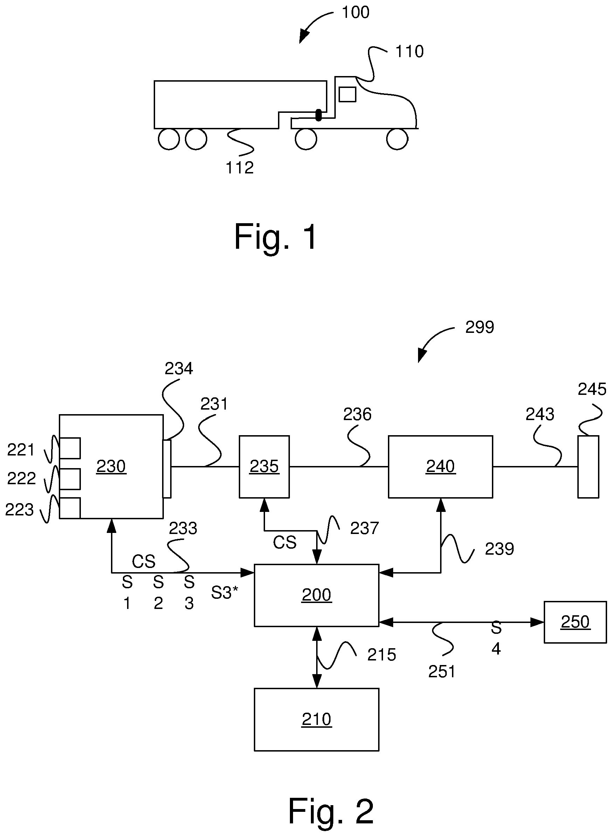

Figure 1 depicts a side view of a vehicle 100. The exemplified vehicle 100 comprises a tractor unit 110 and a trailer 112. The vehicle may be a heavy vehicle, e.g. a truck or a bus. The vehicle may alternatively be a passenger car. The vehicle 100 is a motor vehicle with automated transmission. The vehicle 100 has an automatic clutch and may have no clutch pedal.

The term "link" refers herein to a communication link which may be a physical connection such as an opto-electronic communication line, or a non-physical connection such as a wireless connection, e.g. a radio link or microwave link.

Figure 2 depicts a subsystem 299 of the vehicle 100. The subsystem 299 is arranged in the tractor unit 110. The subsystem 299 has an engine 230. The engine 230 may be a combustion engine. The combustion engine may be an engine with six cylinders. The combustion engine may alternatively have four, five or eight cylinders. The combustion engine may be a diesel engine. The combustion engine may alternatively be a petrol, gas or ethanol engine.

The engine 230 has a flywheel 234 fastened to it and situated downstream in the driveline of the vehicle in a conventional manner. As described above, the torque and representations thereof which are generated or may be generated by the engine are herein referred to the torque associated with the flywheel 234. According to alternative embodiments, torques of other parts of the driveline of the vehicle may be used as references for implementing the invention. The flywheel 234 is connected to a first end of an output shaft 231 which extends from the engine 230 and which is connected at a second end of it to a clutch 235. The clutch may for example be of a conventional disc type, e.g. a two-disc clutch. The clutch 235 is also connected to a shaft 236. The shaft 236 is an input shaft to a gearbox 240. The gearbox 240 has an output shaft 243 adapted to transmitting power from the engine to a number of powered wheels 245 in a conventional manner. The clutch 235 is adapted to being able to interrupt the power transmission in a driveline of the motor vehicle 100. The driveline comprises the engine 230, the shaft 231, the clutch 235, the shaft 236, the gearbox 240 and the shaft 243.

According to a version, a first control unit 200 is adapted to controlling the engine 230, the clutch 235 and the gearbox 240. The first control unit 200 is adapted to communication with the engine via a link 233. The first control unit 200 is adapted to communication with the clutch 235 via a link 237. The first control unit 200 is adapted to communication with the gearbox 240 via a link 239. The first control unit 200 is adapted to performing the innovative method steps according to the invention. The first control unit 200 is adapted to, for example, controlling injection valves for injection of fuel to the engine's cylinders in order thereby to make it possible to regulate a speed of the engine.

The engine 230 is equipped with a first sensor 221 adapted to generating a first signal S1 containing information about prevailing speed *RPMₘₒₘ* of the engine 230. The first sensor 221 is adapted to sending said first signal S1 to the first control unit 200 via the link 233. The first control unit 200 is adapted to receiving the first signal S1 from the first sensor 221. The first sensor 221 is adapted to generating the first signal S1 any desired number of times per unit time, e.g. 100 times per second.

The engine 230 is equipped with a second sensor 222 adapted to generating a second signal S2 containing information about a prevailing instantaneous torque *T*_{*Q*-*mom*} of a flywheel of the engine. The second sensor 222 is adapted to sending the second signal S2 to the first control unit 200 via the link 233. The first control unit 200 is adapted to receiving the second signal S2 from the second sensor 222. The second sensor 222 is adapted to generating the second signal S2 any desired number of times per unit time, e.g. 100 times per second. The second signal S2 containing information about the prevailing instantaneous torque *T*_{*Q*-*mom*} may be used to determine corresponding prevailing speed *RPMₘₒₘ* of the engine 230.

The first control unit 200 is adapted to determining a maximum available torque *T*_{*Q*-max} of the flywheel 234 of the engine 230 on the basis of the received first signal S1. The first control unit 200 is adapted to determining a maximum available torque *T*_{*Q*-*max*} of the flywheel 234 of the engine 230 on the basis of the received second signal S2. The first control unit 200 may be adapted to determining a maximum available torque *T*_{*Q*-*max*} of the flywheel 234 of the engine 230 on the basis of the received first signal S1 and second signal S2. The first control unit 200 is preferably adapted to determining a maximum available torque *T*_{*Q*-*max*} of the flywheel 234 of the engine 230 for a given speed of the engine on the basis of the first signal S1, the second signal S2 or on the basis of a combination of the first signal S1 and the second signal S2.

According to a version, the engine 230 is equipped with determining means 223 adapted to determining a maximum available torque *T*_{*Q*-*max*} of the flywheel 234 of the engine 230 for a given speed of the engine 230. The determining means 223 may be adapted to determining the maximum available torque *T*_{*Q*-*max*} of the flywheel 234 of the engine 230 for an instantaneous speed *RPMₘₒₘ* of the engine 230 measured by the first sensor 221. The determining means 223 may be adapted to determining a maximum available torque *T*_{*Q*-*max*} of the flywheel 234 of the engine 230 on the basis of the instantaneous torque *T*_{*Q*-*mom*} of the flywheel 234 of the engine 230 measured by the second sensor. The determining means 223 are adapted to generating a third signal S3 which contains information about a maximum available torque *T*_{*Q*-max} of the flywheel 234 of the engine 230 determined for a given speed of the engine 230. The given speed is preferably the instantaneous speed *RPMₘₒₘ.* The determining means 223 are adapted to sending the third signal S3 to the first control unit 200 via the link 233. The first control unit 200 is adapted to receiving the third signal S3.

The first control unit 200 is adapted to determining a maximum available torque *T*_{*Q*-*max*} of the flywheel 234 of the engine 230 on the basis of the received first signal S1. The first control unit 200 may be adapted to determining a maximum available torque *T*_{*Q*-*max*} of the flywheel 234 of the engine 230 on the basis of the received first signal S1 and/or the third signal S3. The first control unit 200 is preferably adapted to determining a maximum available torque *T*_{*Q*-*max*} of the flywheel 234 of the engine 230 for a given speed of the engine on the basis of the first signal S1, on the basis of the third signal S3 or on the basis of a combination of the first signal S1 and the third signal S3. Alternatively, the first control unit 200 is adapted to determining a maximum available torque *T*_{*Q*-*max*} of the flywheel 234 of the engine 230 for a given speed of the engine on the basis of the second signal S2.

A set of components comprising the first sensor 221, the second sensor 222 and the determining means 223 may be adapted to internal communication. The first sensor 221, the second sensor 222 and the determining means 223 may thus be adapted to mutual communication. Any desired component of the set may relay one or more signals from other components of the set to the first control unit 200. This means that the first sensor 221 may send the signal S1 to the determining means 223, which may themselves send the signal S1 on unprocessed to the first control unit 200.

According to an example, the determining means 223 may receive the signal S1 from the first sensor 221 and determine a maximum available torque *T*_{*Q*-*max*} of the flywheel of the engine 230 for a given speed of the engine 230 on the basis of the signal S1 and send the third signal S3 to the first control unit 200.

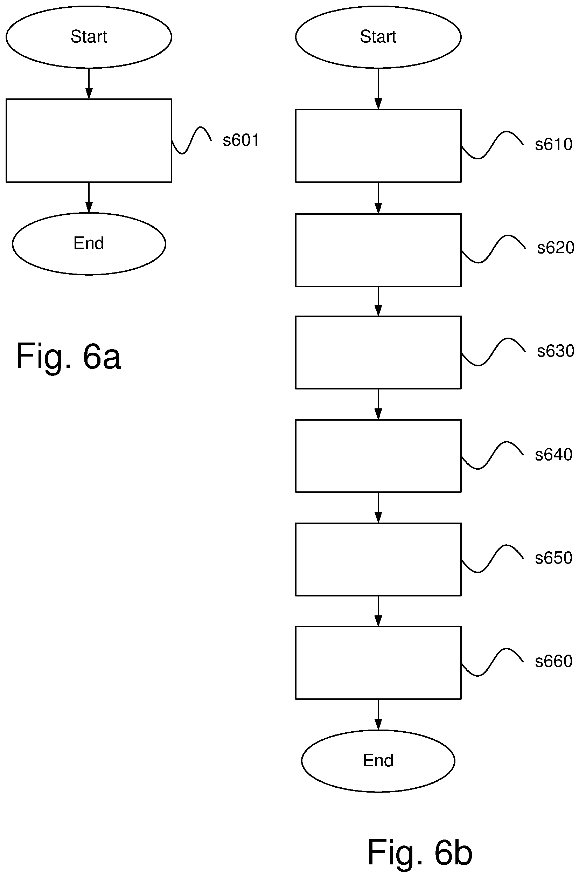

According to an example, the first control unit 200 may receive the first signal S1 from any one of the components of the set and determine a maximum available torque *T*_{*Q*-*max*} of the flywheel of the engine 230 for a given speed of the engine 230 on the sole basis of the first signal S1 by utilising pre-stored data. According to a preferred example, the given speed of the engine 230 is identical to the instantaneous measured speed *RPMₘₒₘ* of the engine 230. The first control unit 200 is explained in more detail with reference to Figure 6 below.

A second control unit 210 is adapted to communication with the control unit 200 via a link 215. The second control unit 210 may be detachably connected to the control unit 200. The second control unit 210 may be a control unit external to the vehicle 100. The second control unit 210 may be adapted to performing the innovative method steps according to the invention. The second control unit 210 may be used for cross-loading software to the control unit 200, particularly software for effecting the innovative method. The second control unit 210 may alternatively be adapted to communication with the control unit 200 via an internal network in the vehicle. The second control unit 210 may be adapted to performing functions substantially similar to the first control unit, e.g. controlling the engine 230, the clutch 235 and the gearbox 240 on the basis of relevant information.

Separate control units may of course be provided for the engine and the gearbox respectively, but in that case they need to be connected together to enable them to communicate relevant information between them.

The first control unit 200 is signal-connected via a link 251, or is connected in some other way, to operating means 250. The operating means 250 may be an acceleration control of the vehicle, e.g. an accelerator pedal. The operating means 250 are adapted to generating a signal S4 which contains information about a torque *T*_{*Q*-*req*} requested by the driver from the flywheel 234 of the engine 230. Signal S4 may be generated in response to a position of the accelerator pedal. Typically, the further the accelerator pedal is depressed, the greater the torque requested by the driver. The operating means 250 are adapted to sending signal S4 to the first control unit 200. The first control unit 200 is adapted to receiving signal S4 from the operating means 250. In English, signal S4 may be called "driver demanded torque signal".

It should be noted that the first sensor 221 is adapted to generating signal S1 any desired number of times per unit time and to sending generated signals S1 to the first control unit 200 sequentially or in any desired order. The second sensor 222 is adapted to generating signal S2 any desired number of times per unit time and to sending generated signals S2 to the first control unit 200 sequentially or in any desired order. The determining means 223 are adapted to generating signal S3 any desired number of times per unit time and to sending generated signals S3 to the first control unit 200 sequentially or in any desired order. The operating means 250 are adapted to generating signal S4 any desired number of times per unit time and to sending generated signals S4 to the first control unit 200 sequentially or in any desired order. Signals S1, S2, S3 and S4 preferably contain time elements which make it possible to correctly use the right signals in various calculations according to different versions of the invention. Signals S1, S2, S3 and S4 are preferably generated synchronously to facilitate calculations according to the innovative method.

According to this version, the control unit 200 is adapted to controlling the gearbox 240 via a link 239. To this end, the control unit 200 is signal-connected to operating means (not depicted) for gear step change in the gearbox in response to command signals initiated by the operating means 250.

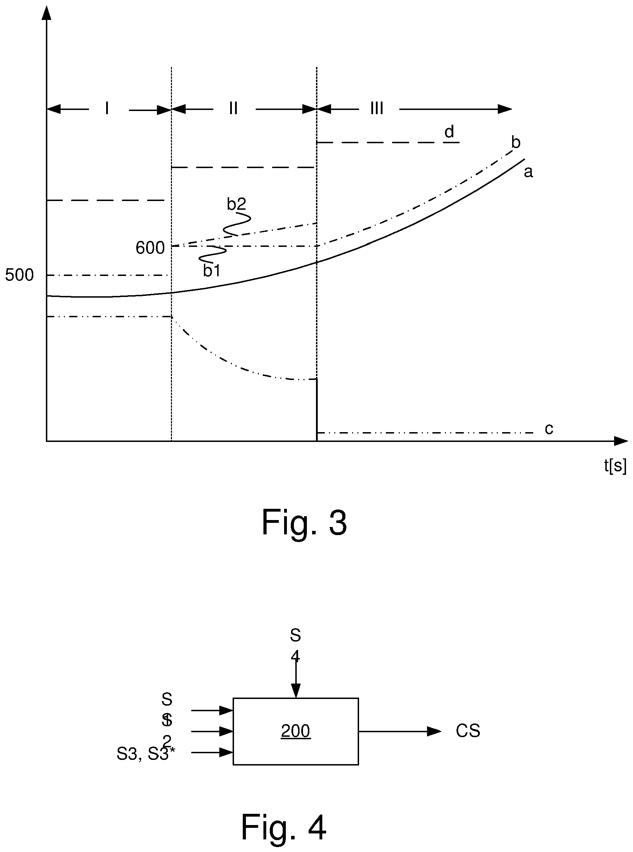

Figure 3 illustrates schematically how various vehicle parameters depend on time. The diagram illustrates four different graphs a, *b, c* and d. It also marks three different moving-off phases for the vehicle, viz. phases I, II and III respectively, as depicted in the diagram.

The first graph a represents a rotation speed of at least one of the powered wheels 245 depicted in Figure 2. In the first phase I, the powered wheels 245 have substantially no rotation speed, i.e. the vehicle is stationary during phase I. The rotation speed is substantially constant at 0 revolutions per minute [rpm].

The second graph b represents speed of the engine of the motor vehicle 100. In the first phase I, the engine 230 runs at a no-load speed *RPM_{idle}.* The no-load speed *RPM_{idle}* may be selected arbitrarily and be stored in the first control unit 200. An example of no-load speed *RPM_{idle}* is 500 rpm.

The third graph c illustrates a state of the clutch 235 of the driveline of the vehicle. In the first phase I the clutch 235 is open and the driveline of the vehicle is thus broken so that there is an interruption of power.

The fourth graph *d* represents a torque *T*_{*Q*-*mom*} of the flywheel of the engine 230 of the vehicle 100. In the first phase I, the torque *T*_{*Q*-*mom*} is any desired set torque. This torque is designated *T*_{*Q*-}*_{idle}.* In practice there will be no torque downstream of the clutch 235 of the driveline of the vehicle, since the clutch 235 is open and there is an interruption of power in the driveline.

The boundary between the first phase I and the second phase II is defined by the clutch commencing a slide-in process in the second phase II.

During the second phase II, the clutch 235 slides together. During this slide-in process, the speed of the engine will be higher than the speed *RPM_{idle}* which prevails during no-load running of the engine in phase I. As described above, prior art provides a solution whereby a predetermined engine speed is used as clutch engagement speed *RPMᵢₙ.* This predetermined speed may for example be 600 rpm. This is represented by the line section b1 in the graph. During the second phase II there is a corresponding higher torque of the flywheel 234 of the engine of the vehicle 100. During the second phase II, the vehicle begins to accelerate. This is also indicated by the first graph a, in which a rotation speed of at least one powered wheel 245 increases with time. The boundary between the second phase II and the third phase III is defined by the clutch 235 becoming fully closed and the driveline of the vehicle being thus fully connected together, resulting in maximum power transmission in the driveline.

During the third phase III, the vehicle continues to accelerate, as indicated by the first curve a and the second curve *b*. During the third phase III there is a further higher torque of the flywheel 234 of the engine 230. During the third phase III, the clutch 235 is fully closed, as described above.

According to an aspect of the invention, the control unit 200 is adapted to adjusting the speed of the engine during the second phase II when a predetermined state is fulfilled. According to an aspect of the invention, the control unit 200 is adapted to selecting and regulating the speed of the engine during the second phase II, when applicable. The state is fulfilled if a driver requests a higher torque *T*_{*Q*-*req*} of the flywheel 234 of the engine 230 than the engine 230 can deliver at prevailing speed *RPMₘₒₘ.* In this case it is appropriate to adjust the speed of the engine 230. When the state is fulfilled, the control unit 200 can raise the speed of the engine to make possible a higher torque *T*_{*Q*-*mom*} of the flywheel 234. During the second phase II, the speed of the engine may be raised in any desired way while the state is fulfilled so that a selected clutch engagement speed can be reached.

According to a first example, the first control unit 200 may be adapted to raising the speed of the engine in a single step to any desired level, e.g. 700 rpm.

According to a second example, the first control unit 200 may be adapted to raising the speed of the engine in a number of smaller steps to any desired level, e.g. 700 or 750 rpm. An example of a step increase is 10 or 20 rpm.

According to a third example, the first control unit 200 may be adapted to raising the speed of the engine in a directly linear manner to any desired level, e.g. 700, 750 or 1000 rpm. A direct linear raising of the speed of the engine to a predetermined level 1000 rpm is illustrated in Figure 3 by line section *b*2.

According to a fourth example, the first control unit 200 may be adapted to raising the speed of the engine according to any desired function, e.g. an exponential function.

Figure 4 illustrates a signal diagram showing the first control unit 200 according to a version supplied with the first signal S1, the second signal S2, the third signal S3 and the fourth signal S4. Signals S1, S2, S3 and S4 are described in more detail above.

The first control unit 200 is adapted to receiving signals S1, S2, S3 and S4. The first control unit 200 is adapted to processing information carried by one or more of signals S1, S2 and S3, in order to generate information about a maximum available torque *T*_{*Q*-*max*} of the flywheel of the vehicle at a given (prevailing) speed *RPMₘₒₘ* of the engine 230. The first control unit is adapted to comparing the information about the maximum available torque *t*_{*Q-*max} with the information carried by the fourth signal S4, i.e. information about driver-requested torque *T*_{*Q*-}*_{req}.* If the driver-requested torque *T*_{*Q*-*req*} is substantially equal to or greater than the maximum available torque *T*_{*Q*-max}, the first control unit 200 can according to the invention control the engine in such a way that its speed increases in a desired manner, e.g. by stepped increase, so that a desired clutch engagement speed is achieved.

According to an embodiment, the first control unit 200 is adapted to receiving only signals S1 and S2. The first control unit 200 is adapted to processing the information carried by one or both of signals S1 and S2, in order to generate information about a maximum available torque *T*_{*Q*-*max*} of the flywheel of the vehicle at a given (prevailing) speed *RPMₘₒₘ* of the engine 230. The first control unit 200 is adapted to comparing the information about the maximum available torque *T*_{*Q*-max} with existing information in a memory in the control unit, i.e. information about torque requested *T*_{*Q*-*req*} by a control routine CR, which control routine may for example be part of a control programme such as "full range cruise control". If the torque *T*_{*Q*-*req*} requested by the control routine is substantially equal to, or greater than, the maximum available torque *T*_{*Q*-max}, the first control unit can according to the invention control the engine in such a way that the engine speed increases in a desired manner, e.g. by stepped raising of the engine speed. The first control unit is adapted, when applicable, to causing the speed of the engine 230 to increase by means of a control signal CS.

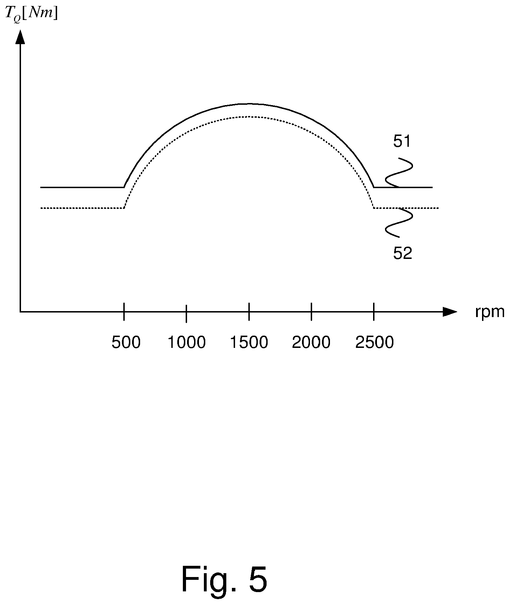

Figure 5 illustrates schematically how a torque *T_{Q}* of the flywheel 234 of the engine 230 depends on a speed RPM of the engine 230 according to an example. It should be noted that different engines have different characteristics. The relationship depicted between maximum available torque *T*_{*Q*-max} and the speed of the engine 230 is merely a schematic representation.

The torque *T*_{*Q*-*max*} is the torque which the engine 230 can deliver at a given speed *RPMₘₒₘ* and is represented by the continuous line 51 in Figure 5.

The torque *T*_{*Q*-*max*} for a given speed of the engine 230 may for example be determined by the determining means 223 illustrated in Figure 2. Alternatively, the torque *T*_{*Q*-*max*} for a given speed of the engine 230 may be determined by the first control unit 200.

It should be noted that a torque *T*_{*Q*-*max*} is a maximum theoretical torque which the engine 230 can deliver at a given speed of the engine 230. A modified maximum torque *T*_{*Q*-maxmod} which the engine 230 can deliver at a given speed of the engine 230 is represented by a broken line 52 in Figure 5. The modified maximum torque *T*_{*Q*-maxmod} is somewhat lower than a corresponding maximum available torque *T*_{*Q-*max} for a given speed of the engine 230. The modified torque *T*_{*Q*-maxmod} is adopted to cater for various loads of the vehicle, e.g. smoke limiter and air conditioning. As these loads affect the maximum available torque of the engine 230, a more realistic maximum available torque *T*_{*Q*-maxmod} may be indicated.

According to an aspect of the invention, the maximum available torque *T*_{*Q*-*max*} is compared with a requested torque *T*_{*Q*-*req*} in order to determine a clutch engagement speed *RPMₘ* for the clutch 235 of the driveline of the vehicle.

According to an aspect of the invention, the modified maximum available torque *T*_{*Q*-maxmod} is compared with a requested torque *T*_{*Q*-*req*} in order to determine a clutch engagement speed *RPMᵢₙ* for a clutch of the driveline of the vehicle.

According to an aspect of the invention, the modified maximum available torque *T*_{*Q*-maxmod} and the maximum available torque *T*_{*Q*-*max*} are compared with a requested torque *T*_{*Q*-*req*} to determine a clutch engagement speed *RPMᵢₙ* for a clutch of the driveline of the vehicle.

According to an embodiment, the first control unit 200 is adapted to receiving only signals S1 and S2. The first control unit 200 is adapted to processing the information carried by one or both of signals S1 and S2, in order to generate information about a modified maximum available torque *T*_{*Q*-maxmod} of the flywheel of the vehicle at a given (prevailing) speed *RPMₘₒₘ* of the engine 230. The first control unit 200 is adapted to comparing the information about the modified maximum available torque *T*_{*Q*-maxmod} with existing information in a memory in the control unit, i.e. information about torque *T*_{*Q*-*req*} requested by a control routine CR, which control routine may for example be part of a control programme such as "full range cruise control". If the torque *T*_{*Q*-*req*} requested by the control routine is substantially equal to, or greater than, the modified maximum available torque *T*_{*Q*-maxmod}, the first control unit 200 can according to the invention control the engine in such a way that the engine speed increases in a desired manner, e.g. by stepped raising of the engine speed. The first control unit is adapted, where applicable, to causing the speed of the engine 230 to increase by means of a control signal CS.

Figure 6a is a schematic flowchart of a method for improving the drivability of a motor vehicle, according to an embodiment of the invention.

The method comprises a first method step s601. Step s601 comprises the steps of
- comparing a first signal with a second signal, where the first signal contains information about a torque which can be generated by an engine of the vehicle at a prevailing speed of the engine, and the second signal contains information about a torque requested from the engine, and
- selecting a clutch engagement speed of the engine for an automated clutch in the driveline of the vehicle on the basis of said comparison between the first signal and the second signal. After step s601 the method ends.

Figure 6b illustrates schematically a flowchart in more detail of a method for improving the drivability of a motor vehicle with a driveline which has an automatic clutch, according to an embodiment of the invention.

The method comprises a first method step s610. Step s610 comprises the step of generating a signal S1 which contains information about a prevailing speed *RPMₘₒₘ* of the engine of the vehicle. Step s610 comprises also the step of sending signal S1 to the first control unit 200. Step s610 is followed by a step s620.

Method step s620 comprises generating a signal S3 which contains information about a maximum available torque of the flywheel 234 of the engine 230. Signal S3 may be generated by the determining means 223 and sent to the control unit 200. Signal S3 may alternatively be generated by the control unit 200. The third signal S3 is generated in response to the first signal S1 and/or the second signal S2 because the maximum available torque of the engine 230 has to be indicated for a given speed of the engine 230. Step s620 is followed by a step s630.

Method step s630 comprises generating a modified signal S3* which contains information about a modified maximum available torque *T*_{*Q*-maxmod} of the flywheel 234 of the engine 230. Signal S3* may be generated by the determining means 223 and sent to the control unit 200. Signal S3* may alternatively be generated by the control unit 200. The third signal S3* may be generated in response to the first signal S1 and/or the second signal S2 because the modified maximum available torque *T*_{*Q*-maxmod} of the engine 230 has to be indicated for a given speed *RPMₘₒₘ* of the engine 230. Step s630 is followed by a step s640.

Method step s640 comprises generating a signal S4 which contains information about requested torque *T*_{*Q*-}*_{req}.* This torque *T*_{*Q*-*req*} may be requested by a driver by means of an accelerator pedal. Alternatively, this torque may be requested by a control routine stored in the first control unit 200. Step s640 is followed by a step s650.

Method step s650 comprises comparing the generated signal S4 with signal S3 and/or S3* to determine whether a predetermined state obtains. Step s650 will find that the predetermined state obtains if a ratio *T*_{*Q*-*req*}/*T*_{*Q*-max} or a ratio *T*_{*Q*-*req*}/*T*_{*Q-*maxmod} is greater than or equal to one (1). If the predetermined state obtains, it means that a torque *T*_{*Q*-*req*} requested from the engine 230 cannot be delivered because physical limitations of the engine do not allow the torque *T*_{*Q*-*req*} requested from it to be delivered. Step s650 is followed by a step s660.

Method step s660 comprises, if the predetermined state indicated in step s650 obtains, selecting a speed of the engine as appropriate engagement speed *RPMᵢₙ* for the clutch 235 of the driveline of the vehicle 100. Step s660 comprises also controlling the engine towards the selected speed *RPMᵢₙ* in order to regulate the speed of the engine in a desired manner. This regulation may be effected in various ways, e.g. by stepped increase of engine speed.

According to a version, it is possible, when the predetermined state obtains, for an engine speed increase towards the selected clutch engagement speed *RPMᵢₙ* to be limited upwards to a predetermined value, e.g. 1000 rpm. This constitutes a safety mechanism intended to achieve limited wear of the clutch 235. According to another version there is, when the predetermined state obtains, no upward limitation on speed increase towards the selected clutch engagement speed *RPMᵢₙ*, so the engine speed increase can be effected to the selected clutch engagement speed *RPMᵢₙ.* This has the advantage that very high torque of the flywheel of the engine 230 can be effected if necessary. However, sliding the clutch of the driveline of the vehicle in at high engine speed will cause greater wear of the clutch. After step s660 the method ends.

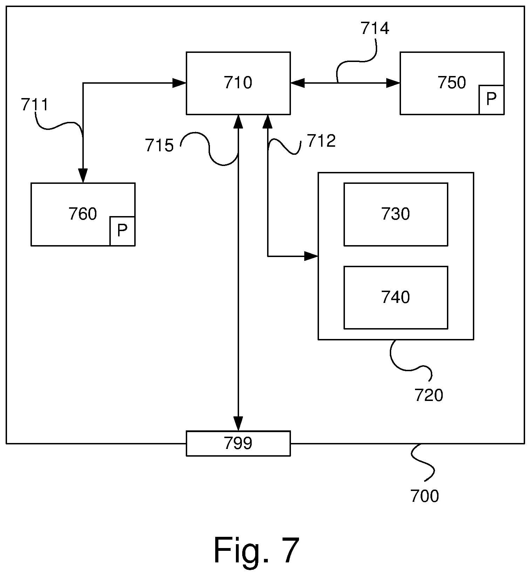

Figure 7 is a diagram of a version of a device 700. The control units 200 and 210 described with reference to Figure 2 and Figure 4 may in a version comprise the device 700. The device 700 comprises a non-volatile memory 720, a data processing unit 710 and a read/write memory 750. The non-volatile memory 720 has a first memory element 730 in which a computer programme, e.g. an operating system, is stored for controlling the function of the device 700. The device 700 further comprises a bus controller, a serial communication port, I/O means, an A/D converter, a time and date input and transfer unit, an event counter and an interruption controller (not depicted). The non-volatile memory 720 has also a second memory element 740.

A computer programme P comprising routines for improving the drivability of a motor vehicle according to the invention is provided. The programme P comprises routines for selecting an engagement speed of the engine for an automated clutch, in accordance with the innovative method. The programme P may be stored in an executable form or in a compressed form in a memory 760 and/or in a read/write memory 750.

Where it is stated that the data processing unit 710 performs a certain function, it means that the data processing unit 710 effects a certain part of the programme which is stored in the memory 760 or a certain part of the programme which is stored in the read/write memory 750. The data processing device 710 can communicate with a data port 799 via a data bus 715. The non-volatile memory 720 is intended for communication with the data processing unit 710 via a data bus 712. The separate memory 760 is intended to communicate with the data processing unit 710 via a data bus 711. The read/write memory 750 is intended to communicate with the data processing unit 710 via a data bus 714. The links 233, 237 and 251 for example may be connected to the data port 799 (see Figure 2) to receive signals S1, S2, S3 and S4.

When data are received on the data port 799, they are stored temporarily in the second memory element 740. When input data received have been temporarily stored, the data processing unit 710 will be ready to effect code execution in a manner described above. According to a version, data received comprise information about prevailing speed of the engine 230, current torque of the flywheel 234 of the engine 230, maximum available torque *T*_{*Q*-*max*} of the flywheel 234 of the engine 230, and modified maximum available torque *T*_{*Q*-*maxmod*} of the flywheel 234 of the engine 230. This information may be used by the device 700 for controlling the engine 230 in that regulation of the speed of the engine 230 can be effected if a predetermined state obtains. The device 700 is also adapted to controlling the automated clutch 235 so that the latter slides together at the selected speed *RPMᵢₙ* of the engine, or at a speed which is lower than the selected speed *RPMᵢₙ* if there is an upper limitation of the clutch engagement speed *RPMᵢₙ.* Parts of the methods herein described may be effected by the device 700 by means of the data processing unit 710 which runs the programme stored in the memory 760 or the read/write memory 750. When the device 700 runs the programme, methods herein described are executed. The foregoing description of the preferred embodiments of the present invention is provided for illustrative and descriptive purposes. It is not intended to be exhaustive or to limit the invention to the variants described. Many modifications and variants will obviously be apparent to one skilled in the art. The embodiments have been chosen and described in order best to make clear the principles of the invention and its practical applications and hence to make it possible for specialists to understand the invention for various embodiments and with the various modifications appropriate to the intended use.

## Claims

1. A method for improving the drivability of a motor vehicle (100; 110) with a driveline, comprising the steps of
- comparing a first signal (S3; S3*) with a second signal (S4), where the first signal (S3; S3*) contains information about a torque (*T*_{*Q-*max}; *T*_{*Q*-maxmod}) which can be generated by an engine (230) of the vehicle (100; 110) at a prevailing speed (*RPMₘₒₘ*) of the engine (230), and the second signal (S4) contains information about a requested torque (*T*_{*Q*-*req*}) of the engine, and
- selecting an engagement speed (*RPMᵢₙ*) of the engine (230) for an automated clutch (235) in the driveline of the vehicle (100; 110) on the basis of said comparison between the first signal (S3; S3*) and the second signal (S4).

2. A method according to claim 1, further comprising the step of
- adjusting the prevailing speed (*RPMₘₒₘ*) of the engine (230) on the basis of the selected clutch engagement speed (*RPMᵢₙ*)*.*

3. A method according to claim 1 or 2, further comprising the step of
- setting the vehicle in motion by sliding the clutch (235) on in the driveline of the motor vehicle (100; 110) in such a way that a torque of the sliding clutch (235) does not exceed the torque (*T*_{*Q*-maxmod}) indicated by the first signal (S3; S3*).

4. A method according to any one of claims 1-3, further comprising the step of
- manually generating the second signal (S4) containing information about torque (*T*_{*Q*-*req*}) requested from the engine (230).

5. A method according to any one of claims 1-3, further comprising the step of
- generating the second signal (S4) containing information about torque (*T*_{*Q*-*req*}) requested from the engine (230) on the basis of data stored in a control unit (200; 210) of the motor vehicle (100; 110).

6. A method according to any one of claims 1-5, further comprising the steps of
- comparing the first signal (S3; S3*) with the second signal (S4) in such a way that it is possible to determine whether a predetermined state obtains, and
- selecting the engagement speed (*RPMᵢₙ*) of the engine (230) for an automated clutch (235) in the driveline of the vehicle (100; 110) if said state obtains.

7. A method according to any one of claims 1-6, in which the first signal (S3; S3*) contains information about a maximum available torque (*T*_{*Q*-max}) which can be generated by an engine (230) of the vehicle (100; 110) at the prevailing speed (*RPMₘₒₘ*) of the engine (230).

8. A method according to any one of claims 1-7, in which the first signal (S3; S3*) contains information about a modified maximum available torque (*T*_{*Q*-maxmod}) which can be generated by an engine (230) of the vehicle (100; 110) at the prevailing speed (*RPMₘₒₘ*) of the engine (230).

9. A method according to claim 8, further comprising the step of
- determining the modified maximum available torque (*T*_{*Q*-maxmod}) on the basis of the information about the maximum available torque (*T*_{*Q*-max}) which can be generated by an engine (230) of the motor vehicle (100; 110) at the prevailing speed (*RPMₘₒₘ*) of the engine (230).

10. A system for improving the drivability of a motor vehicle, comprising
- means (200; 210) for comparing a first signal (S3; S3*) with a second signal (S4), where the first signal (S3; S3*) comprises information about a torque (*T*_{*Q*-max};*T*_{*Q*-maxmod}) which can be generated by an engine (230) of the vehicle (100; 110) at a prevailing speed (*RPMₘₒₘ*) of the engine (230), and the second signal (S4) contains information about a requested torque (*T*_{*Q*-*req*}) of the engine, and
- means (200; 210) for selecting an engagement speed (*RPMᵢₙ)* of the engine (230) for an automated clutch (235) in the driveline of the vehicle (100; 110) on the basis of said comparison between the first signal (S3; S3*) and the second signal (S4).

11. A system according to claim 10, further comprising
- means (200; 210) for adjusting the prevailing speed (*RPMₘₒₘ*) of the engine (230) on the basis of the selected clutch engagement speed (*RPMᵢₙ*)*.*

12. A system according to claim 10 or 11, further comprising
- means (200; 210) for setting the vehicle in motion by sliding the clutch (235) on in the driveline of the motor vehicle (100; 110) in such a way that a torque of the sliding clutch (235) does not exceed the torque (*T*_{*Q*-maxmod}) indicated by the first signal (S3; S3*).

13. A system according to any one of claims 10-12, further comprising
- means (250) for manually generating the second signal (S4) containing information about torque (*T*_{*Q*-*req*}) requested from the engine (230).

14. A system according to any one of claims 10-12, further comprising
- means (200; 210) for generating the second signal (S4) containing information about torque (*T*_{*Q*-*req*}) requested from the engine (230) on the basis of predetermined data.

15. A system according to any one of claims 10-14, further comprising
- means (200; 210) for comparing the first signal (S3; S3*) with the second signal (S4) in such a way that it is possible to determine whether a predetermined state obtains, and
- means (200; 210) for selecting the engagement speed (*RPMᵢₙ*) of the engine (230) for an automated clutch (235) in the driveline of the vehicle (100; 110) if said state obtains.

16. A system according to any one of claims 10-15, in which the first signal (S3; S3*) contains information about a maximum available torque (*T*_{*Q*-max}) which can be generated by an engine (230) of the vehicle (100; 110) at the prevailing speed (*RPMₘₒₘ*) of the engine (230).

17. A system according to any one of claims 10-16, in which the first signal (S3; S3*) contains information about a modified maximum available torque (*T*_{*Q*-maxmod}) which can be generated by an engine (230) of the vehicle (100; 110) at the prevailing speed (*RPMₘₒₘ*) of the engine (230).

18. A system according to claim 17, further comprising
- means (200; 210; 222) for determining the modified maximum available torque (*T*_{*Q*-maxmod}) on the basis of the information about maximum available torque which can be generated by an engine (230) of the vehicle (100; 110) at the prevailing speed (*RPMₘₒₘ*) of the engine (230).

19. A motor vehicle (100; 110) comprising a system according to any one of claims 10-18.

20. A motor vehicle (100; 110) according to claim 19, which motor vehicle is any from among truck, bus or passenger car.

21. A computer programme (P) for improving the drivability of a vehicle with a driveline and automatic clutch, which computer programme (P) comprises programme code stored on a computer-readable medium for causing an electronic control unit (200) or another computer (210) connected to the electronic control unit (200) to perform the steps according to any one of claims 1-9.

22. A computer programme product comprising a programme code stored on a computer-readable medium for performing the method steps according to any one of claims 1-9, when a computer programme containing the programme code is run on an electronic control unit (200) or another computer (210) connected to the electronic control unit (200).

## Patentansprüche

1. Verfahren zum Verbessern des Fahrverhaltens eines Kraftfahrzeugs (100; 110) mit einem Antriebsstrang, das die Schritte aufweist:
- Vergleichen eines ersten Signals (S3; S3*) mit einem zweiten Signal (S4), wobei das erste Signal (S3; S3*) Informationen über ein Drehmoment (*T*_{*Q*-*max*}; *T*_{*Q*-*maxmod*}) enthält, das von einem Verbrennungsmotor (230) des Fahrzeugs (100; 110) bei einer vorherrschenden Drehzahl (*RPMₘₒₘ*) des Verbrennungsmotors (230) erzeugt werden kann, und das zweite Signal (S4) Informationen über ein vom Verbrennungsmotor angefordertes Drehmoment (*T*_{*Q*-*re*q}) enthält, und
- Wählen einer Eingriffsdrehzahl (*RPMᵢₙ*) des Verbrennungsmotors (230) für eine automatische Kupplung (235) im Antriebsstrang des Fahrzeugs (100; 110) auf Basis des Vergleichs zwischen dem ersten Signal (S3; S3*) und dem zweiten Signal (S4).

2. Verfahren nach Anspruch 1, das ferner den Schritt aufweist:
- Einstellen der vorherrschenden Drehzahl (*RPMₘₒₘ*) des Verbrennungsmotors (230) auf Basis der gewählten Eingriffsdrehzahl (*RPMᵢₙ*) der Kupplung.

3. Verfahren nach Anspruch 1 oder 2, das ferner den Schritt aufweist:
- Anfahren des Fahrzeugs durch Schleifen der Kupplung (235) im Antriebsstrang des Kraftfahrzeugs (100; 110) in der Weise, dass das Drehmoment der schleifenden Kupplung (235) das vom ersten Signal (S3; S3*) angegebene Drehmoment (*T*_{*Q*-*maxmod*}) nicht überschreitet.

4. Verfahren nach einem der Ansprüche 1 bis 3, das ferner den Schritt aufweist:
- manuelles Erzeugen des zweiten Signals (S4), das Informationen über das vom Verbrennungsmotor (230) angeforderte Drehmoment (*T*_{*Q*-*re*q}) enthält.

5. Verfahren nach einem der Ansprüche 1 bis 3, das ferner den Schritt aufweist:
- Erzeugen des zweiten Signals (S4), das Informationen über das vom Verbrennungsmotor angeforderte Drehmoment (*T*_{*Q*-*re*q}) enthält, auf Basis der in einer Steuereinheit (200; 210) gespeicherten Daten des Kraftfahrzeugs (100; 110).

6. Verfahren nach einem der Ansprüche 1 bis 5, das ferner die Schritte aufweist:
- Vergleichen des ersten Signals (S3; S3*) mit dem zweiten Signal (S4) auf eine solche Weise, dass es möglich ist zu bestimmen, ob ein vorgegebener Zustand vorliegt, und
- Wählen einer Eingriffsdrehzahl (*RPMᵢₙ*) des Verbrennungsmotors (230) für eine automatische Kupplung (235) im Antriebsstrang des Fahrzeugs (100; 110), wenn dieser Zustand vorliegt.

7. Verfahren nach einem der Ansprüche 1 bis 6, wobei das erste Signal (S3; S3*) Informationen über ein maximales verfügbares Drehmoment (*T*_{*Q*-*max*}) enthält, das von einem Verbrennungsmotor (230) des Fahrzeugs (100; 110) bei der vorherrschenden Drehzahl (*RPMₘₒₘ*) des Verbrennungsmotors (230) erzeugt werden kann.

8. Verfahren nach einem der Ansprüche 1 bis 7, wobei das erste Signal (S3; S3*) Informationen über ein modifiziertes maximales verfügbares Drehmoment (*T*_{*Q*-*maxmod*}) enthält, das von einem Verbrennungsmotor (230) des Fahrzeugs (100; 110) bei der vorherrschenden Drehzahl (*RPMₘₒₘ*) des Verbrennungsmotors (230) erzeugt werden kann.

9. Verfahren nach Anspruch 8, das ferner den Schritt aufweist:
- Bestimmen des modifizierten maximalen verfügbaren Drehmoments (*T*_{*Q*-*maxmod*}) auf Basis der Informationen über das maximale verfügbare Drehmoment (*T*_{*Q*-*max*}), das von einem Verbrennungsmotor (230) des Kraftfahrzeugs (100; 110) bei der vorherrschenden Drehzahl (*RPMₘₒₘ*) des Verbrennungsmotors (230) erzeugt werden kann.

10. System zum Verbessern des Fahrverhaltens eines Kraftfahrzeugs, aufweisend:
- Mittel (200; 210) zum Vergleichen eines ersten Signals (S3; S3*) mit einem zweiten Signal (S4), wobei das erste Signal (S3; S3*) Informationen über ein Drehmoment (*T*_{*Q*-*max*}; *T*_{*Q*-*maxmod*}) enthält, das von einem Verbrennungsmotor (230) des Fahrzeugs (100; 110) bei einer vorherrschenden Drehzahl (*RPMₘₒₘ*) des Verbrennungsmotors (230) erzeugt werden kann, und das zweite Signal (S4) Informationen über ein vom Verbrennungsmotor angefordertes Drehmoment (*T*_{*Q*-*re*q}) enthält, und
- Mittel (200; 210) zum Wählen einer Eingriffsdrehzahl (*RPMᵢₙ*) des Verbrennungsmotors (230) für eine automatische Kupplung (235) im Antriebsstrang des Fahrzeugs (100; 110) auf Basis des Vergleichs zwischen dem ersten Signal (S3; S3*) und dem zweiten Signal (S4).

11. System nach Anspruch 10, ferner mit
- Mitteln (200; 210) zum Einstellen der vorherrschenden Drehzahl (*RPMₘₒₘ*) des Verbrennungsmotors (230) auf Basis der gewählten Eingriffsdrehzahl (*RPMᵢₙ*) der Kupplung.

12. System nach Anspruch 10 oder 11, ferner mit
- Mitteln (200; 210) zum Anfahren des Fahrzeugs durch Schleifen der Kupplung (235) im Antriebsstrang des Kraftfahrzeugs (100; 110) in der Weise, dass das Drehmoment der schleifenden Kupplung (235) das vom ersten Signal (S3; S3*) angegebene Drehmoment (*T*_{*Q*-*maxmod*}) nicht überschreitet.

13. System nach einem der Ansprüche 10 bis 12, ferner mit
- Mitteln (200; 210) zum manuellen Erzeugen des zweiten Signals (S4), das Informationen über das vom Verbrennungsmotor (230) angeforderte Drehmoment (*T*_{*Q*-*req*}) enthält.

14. System nach einem der Ansprüche 10 bis 12, ferner mit
- Mitteln (200; 210) zum Erzeugen des zweiten Signals (S4), das Informationen über das vom Verbrennungsmotor (230) auf Basis vorgegebener Daten angeforderte Drehmoment (*T*_{*Q*-*req*}) enthält.

15. System nach einem der Ansprüche 10 bis 14, ferner mit
- Mitteln (200; 210) zum Vergleichen des ersten Signals (S3; S3*) mit dem zweiten Signal (S4) auf eine solche Weise, dass es möglich ist zu bestimmen, ob ein vorgegebener Zustand vorliegt, und
- Mitteln (200; 210) zum Wählen der Eingriffsdrehzahl (*RPMᵢₙ*) des Verbrennungsmotors (230) für eine automatische Kupplung (235) im Antriebsstrang des Fahrzeugs (100; 110), wenn dieser Zustand vorliegt.

16. System nach einem der Ansprüche 10 bis 15, wobei das erste Signal (S3; S3*) Informationen über ein maximales verfügbares Drehmoment (*T*_{*Q*-*max*}) enthält, das von einem Verbrennungsmotor (230) des Fahrzeugs (100; 110) bei der vorherrschenden Drehzahl (*RPMₘₒₘ*) des Verbrennungsmotors (230) erzeugt werden kann.

17. System nach einem der Ansprüche 10 bis 16, wobei das erste Signal (S3; S3*) Informationen über ein modifiziertes maximales verfügbares Drehmoment (*T*_{*Q*-*maxmod*}) enthält, das von einem Verbrennungsmotor (230) des Fahrzeugs (100; 110) bei der vorherrschenden Drehzahl (*RPMₘₒₘ*) des Verbrennungsmotors (230) erzeugt werden kann.

18. System nach Anspruch 17, ferner mit
- Mitteln (200; 210; 222) zum Bestimmen des modifizierten maximalen verfügbaren Drehmoments (*T*_{*Q*-*maxmod*}) auf Basis der Informationen über das maximale verfügbare Drehmoment (*T*_{*Q*-*max*}), das von einem Verbrennungsmotor (230) des Fahrzeugs (100; 110) bei der vorherrschenden Drehzahl (*RPMₘₒₘ*) des Verbrennungsmotors (230) erzeugt werden kann.

19. Kraftfahrzeug (100; 110), das ein System nach einem der Ansprüche 10 bis 18 aufweist.

20. Kraftfahrzeug (100; 110) nach Anspruch 19, wobei das Kraftfahrzeug entweder ein Lastkraftwagen, ein Omnibus oder ein Personenkraftwagen ist.

21. Computerprogramm (P) zur Verbesserung des Fahrverhaltens eines Fahrzeugs mit einem Antriebsstrang und einer automatischen Kupplung, wobei das Computerprogramm (P) einen auf einem computerlesbaren Medium gespeicherten Programmcode aufweist, um eine elektronische Steuereinheit (200) oder einen anderen mit der elektronischen Steuereinheit (200) verbundenen Computer (210) zu veranlassen, die Schritte nach einem der Ansprüche 1 bis 9 auszuführen.

22. Computerprogrammprodukt, das einen auf einem computerlesbaren Medium gespeicherten Programmcode aufweist, um die Verfahrensschritte nach einem der Ansprüche 1 bis 9 auszuführen, wenn ein den Programmcode enthaltendes Computerprogramm auf einer elektronischen Steuereinheit (200) oder einem anderen mit der elektronischen Steuereinheit (200) verbundenen Computer (210) ausgeführt wird.

## Revendications

1. Procédé pour améliorer la manoeuvrabilité d'un véhicule à moteur (100 ; 110) ayant une transmission, comprenant les étapes consistant à :
- comparer un premier signal (S3 ; S3*) à un deuxième signal (S4), le premier signal (S3 ; S3*) contenant des informations concernant un couple (*T*_{*Q*-max} ; *T*_{*Q*-max mod}) qui peut être généré par un moteur (230) du véhicule (100 ; 110) à une vitesse dominante (*RPMₘₒₘ*) du moteur, et le deuxième signal (S4) contenant des informations concernant un couple demandé (*T*_{*Q*-*req*}) du moteur, et
- sélectionner une vitesse d'engrènement (*RPMᵢₙ*) du moteur (230) pour un embrayage automatique (235) de la transmission du véhicule (100 ; 110) en fonction de ladite comparaison entre le premier signal (S3 ; S3*) et le deuxième signal (S4).

2. Procédé selon la revendication 1, comprenant en outre l'étape consistant à :
- ajuster la vitesse dominante (*RPMₘₒₘ*) du moteur (230) en fonction de la vitesse d'engrènement d'embrayage (*RPMᵢₙ)* sélectionnée.

3. Procédé selon la revendication 1 ou 2, comprenant en outre l'étape consistant à :
- mettre le véhicule en mouvement en enclenchant l'embrayage (235) par coulissement sur la transmission du véhicule à moteur (100 ; 110) de telle sorte qu'un couple de l'embrayage coulissant (235) n'excède pas le couple (*T*_{*Q*-*max* mod}) indiqué par le premier signal (S3 ; S3*).

4. Procédé selon l'une quelconque des revendications 1 à 3, comprenant en outre l'étape consistant à :
- générer manuellement le deuxième signal (S4) contenant des informations concernant le couple (*T*_{*Q*-req}) demandé au moteur (230).

5. Procédé selon l'une quelconque des revendications 1 à 3, comprenant en outre l'étape consistant à :
- générer le deuxième signal (S4) contenant des informations concernant le couple (*T*_{*Q*-req}) demandé au moteur (230) en fonction de données stockées dans l'unité de commande (200 ; 210) du véhicule à moteur (100 ; 110).

6. Procédé selon l'une quelconque des revendications 1 à 5, comprenant en outre les étapes consistant à :
- comparer le premier signal (S3 ; S3*) au deuxième signal (S4) de telle sorte qu'il soit possible de déterminer si un état prédéterminé est atteint, et
- sélectionner la vitesse d'engrènement (*RPMᵢₙ)* du moteur (230) pour un embrayage automatique (235) sur la transmission du véhicule (100 ; 110) si ledit état est atteint.

7. Procédé selon l'une quelconque des revendications 1 à 6, dans lequel le premier signal (S3 ; S3*) contient des informations concernant un couple maximal disponible (*T*_{*Q*-max}) qui peut être généré par un moteur (230) du véhicule (100 ; 110) à la vitesse dominante (*RPMₘₒₘ*) du moteur (230).

8. Procédé selon l'une quelconque des revendications 1 à 7, dans lequel le premier signal (S3 ; S3*) contient des informations concernant un couple maximal disponible modifié (*T*_{*Q*-max mod}) qui peut être généré par un moteur (230) du véhicule (100 ; 110) à la vitesse dominante (*RPMₘₒₘ*) du moteur (230).

9. Procédé selon la revendication 8, comprenant en outre l'étape consistant à :
- déterminer le couple maximal disponible modifié (*T*_{*Q*-max mod}) en fonction des informations concernant le couple maximal disponible (*T*_{*Q*-max}) qui peut être généré par un moteur (230) du véhicule à moteur (100 ; 110) à la vitesse dominante (*RPMₘₒₘ*) du moteur (230).

10. Système pour améliorer la manoeuvrabilité d'un véhicule à moteur, comprenant :
- des moyens (200 ; 210) pour comparer un premier signal (S3 ; S3*) à un deuxième signal (S4), le premier signal (S3 ; S3*) comprenant des informations concernant un couple (*T*_{*Q*-max} ; *T*_{*Q*-max mod}) qui peut être généré par un moteur (230) du véhicule (100 ; 110) à une vitesse dominante (*RPMₘₒₘ*) du moteur, et le deuxième signal (S4) contenant des informations concernant un couple demandé (*T*_{*Q*-*req*}) du moteur, et
- des moyens (200 ; 210) pour sélectionner une vitesse d'engrènement (*RPMᵢₙ)* du moteur (230) pour un embrayage automatique (235) de la transmission du véhicule (100 ; 110) en fonction de ladite comparaison entre le premier signal (S3 ; S3*) et le deuxième signal (S4).

11. Système selon la revendication 10, comprenant en outre :
- des moyens (200 ; 210) pour ajuster la vitesse dominante (*RPMₘₒₘ*) du moteur (230) en fonction de la vitesse d'engrènement d'embrayage (*RPMᵢₙ*) sélectionnée.

12. Système selon la revendication 10 ou 11, comprenant en outre :
- des moyens (200 ; 210) pour mettre le véhicule en mouvement en enclenchant l'embrayage (235) par coulissement sur la transmission du véhicule à moteur (100 ; 110) de telle sorte qu'un couple de l'embrayage coulissant (235) n'excède pas le couple (*T*_{*Q*-maxmod}) indiqué par le premier signal (S3 ; S3*).

13. Système selon l'une quelconque des revendications 10 à 12, comprenant en outre :
- des moyens (250) pour générer manuellement le deuxième signal (S4) contenant des informations concernant le couple (*T*_{*Q*-req}) demandé au moteur (230).

14. Système selon l'une quelconque des revendications 10 à 12, comprenant en outre :
- des moyens (200 ; 210) pour générer le deuxième signal (S4) contenant des informations concernant le couple (*T*_{*Q*-*req*}) demandé au moteur (230) en fonction de données prédéterminées.

15. Système selon l'une quelconque des revendications 10 à 14, comprenant en outre :
- des moyens (200 ; 210) pour comparer le premier signal (S3 ; S3*) au deuxième signal (S4) de telle sorte qu'il soit possible de déterminer si un état prédéterminé est atteint, et
- des moyens (200 ; 210) pour sélectionner la vitesse d'engrènement (*RPMᵢₙ*) du moteur (230) pour un embrayage automatique (235) sur la transmission du véhicule (100 ; 110) si ledit état est atteint.

16. Système selon l'une quelconque des revendications 10 à 15, dans lequel le premier signal (S3 ; S3*) contient des informations concernant un couple maximal disponible (*T*_{*Q*-max}) qui peut être généré par un moteur (230) du véhicule (100 ; 110) à la vitesse dominante (*RPMₘₒₘ*) du moteur (230).

17. Système selon l'une quelconque des revendications 10 à 16, dans lequel le premier signal (S3 ; S3*) contient des informations concernant un couple maximal disponible modifié (*T*_{*Q*-max mod}) qui peut être généré par un moteur (230) du véhicule (100 ; 110) à la vitesse dominante (*RPMₘₒₘ*) du moteur (230).

18. Système selon la revendication 17, comprenant en outre :
- des moyens (200 ; 210 ; 222) pour déterminer le couple maximal disponible modifié (*T*_{*Q*-max mod}) en fonction des informations concernant le couple maximal disponible qui peut être généré par un moteur (230) du véhicule (100 ; 110) à la vitesse dominante (*RPMₘₒₘ*) du moteur (230).

19. Véhicule à moteur (100 ; 110) comprenant un système selon l'une quelconque des revendications 10 à 18.

20. Véhicule à moteur (100 ; 110) selon la revendication 19, lequel véhicule à moteur est l'un quelconque d'un camion, d'un bus ou d'une voiture automobile.

21. Programme informatique (P) pour améliorer la manoeuvrabilité d'un véhicule ayant une transmission et un embrayage automatique, lequel programme informatique (P) comprend un code de programme stocké sur un support lisible par ordinateur pour faire en sorte qu'une unité de commande électronique (200) ou un autre ordinateur (210) connecté à l'unité de commande électronique (200) exécute les étapes selon l'une quelconque des revendications 1 à 9.

22. Produit de programme informatique comprenant un code de programme stocké sur un support lisible par ordinateur pour l'exécution des étapes de procédé selon l'une quelconque des revendications 1 à 9, dans lequel un programme informatique contenant le code de programme est exécuté sur une unité de commande électronique (200) ou un autre ordinateur (210) connecté à l'unité de commande électronique (200).
